# EUROPEAN PATENT SPECIFICATION

(11) **EP 0 679 540 B1**
(45) Date of publication and mention of the grant of the patent: **16.07.1997**
(21) Application number: 94830200.5
(22) Date of filing: 27.04.1994
(51) Int. Cl.: B60B 17/00

(54) **Improved elastic wheel**
Verbessertes elastisches Rad
Roue élastique améliorée

(43) Date of publication of application: 02.11.1995
(73) Proprietor: LOVERE SIDERMECCANICA S.p.A., I-24065 Lovere (Bergamo) (IT)
(72) Inventor: Amici, Giampiero, I-24065 Lovere (Bergamo) (IT)
(74) Representative: Lecce, Giovanni

(56) References cited:
- DE-A- 3 012 378
- DE-A- 3 208 978
- DE-A- 3 328 321
- DE-C- 3 150 655
- US-A- 2 251 809

## Description

### BACKGROUND

This invention relates to an elastic wheel especially suited for rail transport means, locomotives and associated wagons in general as defined in the preamble of claim 1 (see also DE-A-3328321).

The wheels subject matter of this invention incorporate conventionally elastic elements whose aim is to cushion the stresses arising from their sliding along the ground-tied rigid rails, reducing therefore sound emissions; such elements are added to the conventional cushioning systems equipping the different railway vehicles.

As is known, the various components of a rail wheel are separated from one another by elastic elements, constituted mainly by suitably shaped rubber blocks, which are placed between the part directly in touch with the rail and the wheel center to which an intermediate ring is connected. The utilization of said rubber blocks, whose main aim is to reduce sound emissions during the running of the vehicle, has the drawback, associated to the tendential reduction in wheel stiffness, that relative shiftings form between the tyre and the wheel center.

To obviate this drawback, various solutions have been proposed, which involve, for instance, the subdivision of the seats of the elastic blocks into opposing hollow spaces, said subdivision being sometimes associated to a specific shaping of said seats. However, the solution does not prove satisfactory in case of high wheel load.

A further drawback which is found in said conventional wheels concerns the fact that, because of the stresses to which they are unavoidably subject during the utilization, they show a marked travel in the axial direction, meaning that the portion in touch with the rail move away relatively from the wheel center. To prevent this oscillation phenomenon, which is often marked and dangerous, the conventional wheels are equipped with special side counter-ledges, which involves complications in the construction stage, with unavoidable cost increases.

Object of this invention is to obviate the aforementioned drawbacks.

More particularly, object of this invention is to realize an elastic wheel, applicable especially to rail transport means and suitable to keep the optimum stiffness in any utilization conditions.

A further object of this invention is to realize an elastic wheel capable of substantially restrain the radial travel relatively to the central core.

Still a further object of this invention is to provide users with a wheel as defined above suitable to ensure a high level of resistance and reliability in the long run, and also such as to be easily and economically realized.

These and still further objects are achieved by the elastic wheel subject matter of this invention, which comprises a central body or wheel center and an intermediate ring connected to one another, a peripheral tyre and a plurality of close cushioning sectors or blocks arranged in an annular seat provided between said ring-connected wheel center and the tyre, and which is basically characterized in that at least a part of said blocks is made from elastomer-covered metal, while the other blocks are made entireley from rubber and alternate with the former ones, relatively to which they have a greater thickness.

The mechanical and functional characteristics of the elastic wheel subject matter of this invention shall be better stressed by the following detailed description of a preferred, non limitative embodiment, wherein reference od made to the attached drawings, wherein:
Fig. 1 shows schematically a partial front view of the elastic wheel on the external side;
Fig. 2 shows schematically a partial through section of said wheel.

With reference to the aforementioned drawings, the elastic wheel subject matter of this invention, indicated as a whole by 10, has conventionally an external body or tyre 12, with a vertically protruding rim 14 acting as a guide and restraint for the rail sliding of the former, an intermediate ring 16 and a central body or wheel center 18, protruding on the opposite fronts relatively to said rings 12 and 16; said central body 18 has on the back front a substantially trapezoid hollow space wherein the intermediate ring 16 is housed, which aligns with the back wall of tyre 12.

Ring 16 and wheel center 18 circumscribe on the opposing fronts substantially aligned with the vertical walls of tyres 12, an annular sunk seat 20, 20', in corrispondence of which they are provided with a through-hole for a generic bolt 22; head 24 of bolt 22 is housed in seat 20, while nut 26 abuts in the opposing seat 20'. Ring 16 and wheel center 18 have, in the upper part looking towards tyre 12, a surface markedly inclined towards the inside or center of wheel 10, circumscribing a V-shaped concave seat, circumscribed at the opposing ends by short-height shoulders 28; the lower portion of tyre 21, looking towards said upper parts of ring 16 and wheel center 18, has a complementary configuration, forming a convex surface circumscribed on the opposing fronts by short-height shoulders 28'.

Therefore, a V-shaped annular seat is realized between tyre 12 on the one side and ring 16 with wheel center 18 on the other side; the height of said seat is advantageously comprised between 5 and 15 mm, while its depth is slightly lower than the level resulting from bringing together ring 16 and wheel center 18 in their upper part looking towards tyre 12. Said annular seat houses a plurality of sectors which realize the cushioning of the stresses of wheel 10, forming at the same time the support and truing base of tyre 12, whose side surface comes in touch with the rail.

According to this invention, some of said cushioning sectors are formed by blocks 30 from metal, preferably from iron or its alloys, having a configuration complementary to that of the aforementioned V-shaped annular seat, and provided, at least along the opposing upper and lower fronts with a covering 30' from elastomeric material of either synthetic or natural origin. Said covering has advantageously a uniform thickness comprised between 0.5 and 3 mm.

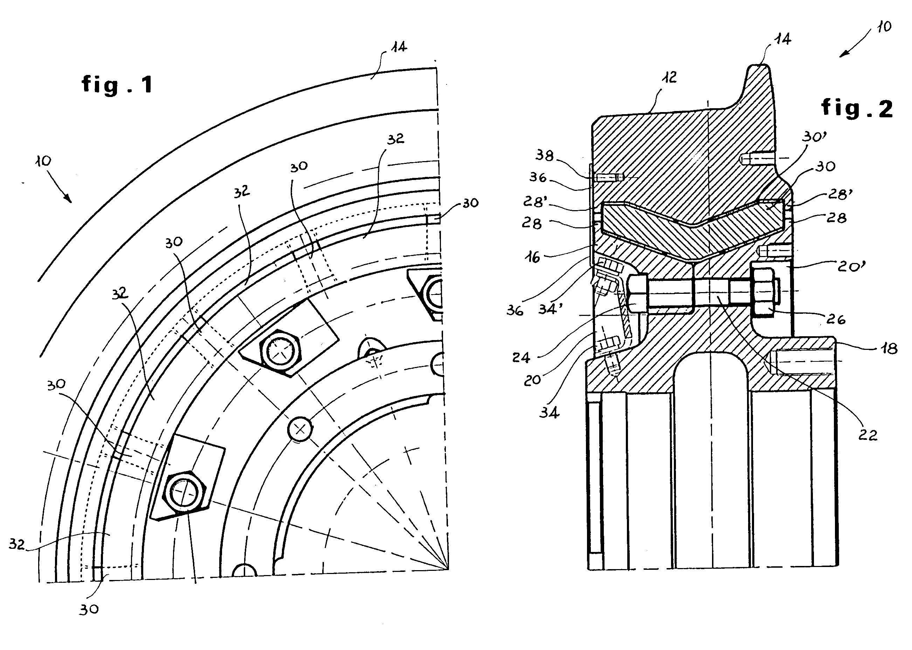

According to a preferred non limitative embodiment, said blocks 30 are systematically alternated, in the V-shaped annular seat, with further conventional blocks made entirely from rubber, having preferably a greater length compared to the former ones, and indicated by 32 on Fig. 1; said blocks have, compared to metal blocks 30 covered with elastomeric material 30', a slightly greater constant thickness.

Blocks or cushioning sector 30, 32, near to one another, fill entirely the V-shaped annular seat provided between tyre 12 and the couple of elements 16, 18, or intermediate ring and wheel center connected to one another, completing in this way the structure of wheel 10.

As said blocks from rubber or covered with an elastomeric material form an insulating sector within wheel 10, a plated conductor 34 is provided which ensures the grounding between wheel center 18 connected to the intermediate ring 16 and tyre 12. An end of said plated conductor, advantageously housed in seat 20, is connected by means of a generic bolt 34 or the like to wheel center 18; the opposite end of said plaited conductor is connected, in its turn, through an analogous bolt 34', to a shaped plate 36, made integral through screw 38 with the external vertical wall which develops above said seat 20.

The assembly of wheel 10 involves the connection of ring 16 to wheel center 18 through bolts 24, the placing in the V-shaped seat of blocks 30, 32 and the positioning of tyre 12 in touch with said blocks; the upper front of blocks 30, 32 creates an anchoring and truing base for tyre 12 which rests on them with its inner convex side surface. During the sliding on the rail, the shiftings of tyre 12 relatively to wheel center 18 are limited both in the radial and axial directions, due to the presence of metal blocks 30 with elastomeric covering 30', which stiffen the whole structure of wheel 10. Besides, said blocks 30 act as side ledges on the opposing fronts for tyre 12, as they prevent its radial travel from being greater than the clearance existing for the dimensioning of blocks 30 relatively to their respective seat; with high stresses there takes place a starting compression of rubber blocks 32, whose thickness is slightly greater than that of the other blocks 30; such compression is therefore annulled by metal blocks 30 whose thin elastic covering 30' forms a further limited cushioning portion between the metal parts of wheel 10.

Obviously, according to the specific load and/or stress requirements of wheel 10, blocks 30 may be differently dimensioned relatively to the embodiment illustrated by way of example, or they may be differently alternated with the rubber blocks. For the same reason, the covering from elastomeric material 30' may have a more or less greater thickness on blocks 30.

As can be understood from the above, the advantages achieved by this invention are evident.

In the elastic wheel subject matter of this invention one can suitably vary the stiffness of the whole by inserting metal blocks 30 alternated with rubber blocks 32, limitating substantially the shiftings of tyre 12 relatively to wheel center 18; providing side counter-ledges is therefore superfluous, which would involve additional workings with the associated cost increase, to hinder the axial travel of said tyre beyond a given limit.

However, this invention, as described hereabove and claimed hereafter, has been proposed only by way of example, meaning that it is susceptible of numerous modifications and variants, all of them falling anyhow within the protection scope of said invention as defined in claims 1 to 8.

## Claims

1. Elastic wheel (10), comprising a central body or wheel center (18) and an intermediate ring (16) connected to one another, a peripheral tyre (12) and a plurality of cushioning sectors or blocks (30), (32) housed in an annular seat provided between said wheel centers (18) with ring (16) and tyre (18), characterized in that at least a part of blocks (30) is from metal with elastomeric material covering (30') and blocks (32) are made entirely from rubber and alternate with said blocks (30) relatively to which they have a greater thickness.

2. Elastic wheel according to claim 1, characterized in that covering (30') of blocks (30) is made from elastomeric material of either natural or synthetic origin, which extends for a length comprised between 0.5 and 3 mm at least along the upper and lower fronts.

3. Elastic wheel according to the preceding claims, characterized in that blocks (32) with covering (30') are shorter than rubber blocks (32) and systematically alternate with them.

4. Elastic wheel according to the preceding claims, characterized in that each of said blocks (30), (32) has a substantially V-shaped profile, meeting the lower front in a complementary concave seat formed by the getting together of the higher part of wheel center (18) and the intermediate ring (16) connected to one another, the opposing upper front of said blocks meeting the inner convex side surface of tyre (12).

5. Elastic wheel according to the preceding claims, characterized in that said inner surface of tyre (12) is at least complementary to the configuration of the upper front of blocks (30) with covering (30').

6. Elastic wheel according to the preceding claims, characterized in that the annular housing seat of blocks (30), (32), circumscribed by the inner side surface of tyre (12) and by the outer front of ring (16) and of the wheel center connected to one another, has a height comprised between 5 and 15 mm and a depth smaller than the level resulting form the getting together of said ring (16) and wheel center (18).

7. Elastic wheel according to one or more of the preceding claims, characterized in that along the inner vertical wall of the intermediate ring (16) and the wheel center (18) annular sunk seats (20), (20') are respectively provided, in whose correspondence said components (16), (18) are provided with a through hole for a bolt (22).

8. Elastic wheel according to one or more of the preceding claims, characterized in that in the annular seat (20) provided along the inner vertical walls of the intermediate ring (16) and wheel center (18) a braided conductor (34) is provided, which is connected at the opposing ends, by means of screws (34), (34'), to said wheel center (18) and to a plate (34), connected by means of a screw (38) to the inner vertical wall of tyre (12).

## Patentansprüche

1. Elastisches Rad (10), umfassend
einen zentralen Körper oder eine Radnabe (18) und einen Zwischenring (16), die miteinander verbunden sind, einen Umfangsreifen (12) und eine Anzahl dämpfender Bogenstücke oder Klötze (30),(32), die in einem ringförmigen Sitz untergebracht sind, der zwischen den Radnaben (18) mit Ring (16) und Reifen (18) vorgesehen ist,
**dadurch gekennzeichnet**,
daß zumindest ein Teil der Klötze (30) aus Metall mit einem Überzug (30') aus Elastomermaterial ist und die Klötze (32) vollständig aus Gummi sind und mit den Klötzen (30) abwechseln, im Vergleich zu denen sie eine größere Dicke haben.

2. Elastisches Rad nach Anspruch 1,
dadurch gekennzeichnet,
daß der Überzug (30') der Klötze (30) aus Elastomermaterial entweder natürlichen oder synthetischen Ursprungs ist, das sich über eine Länge zwischen 0,5 und 3 mm zumindest entlang der oberen und unteren Seiten erstreckt.

3. Elastisches Rad nach den vorhergehenden Ansprüchen,
dadurch gekennzeichnet,
daß die Klötze (32) mit dem Überzug (30') kürzer sind als die Gummiklötze (32) und systematisch mit ihnen abwechseln.

4. Elastisches Rad nach den vorhergehenden Ansprüchen,
dadurch gekennzeichnet,
daß jeder der Klötze (30),(32) ein im wesentlichen V-förmiges Profil hat, wobei er die untere Seite in einem ergänzenden konkaven Sitz berührt, der gebildet wird durch das Aufeinandertreffen des höheren Teils der Radnabe (18) und des Zwischenrings (16), die miteinander verbunden sind, wobei die gegenüberliegende obere Seite der Klötze die innere konvexe Seitenoberfläche des Reifens (12) berührt.

5. Elastisches Rad nach den vorhergehenden Ansprüchen,
dadurch gekennzeichnet,
daß die Innenfläche des Reifens (12) zumindest komplementär zu der Gestalt der oberen Seite der Klötze (30) mit dem Überzug (30') ist.

6. Elastisches Rad nach den vorhergehenden Ansprüchen,
dadurch gekennzeichnet,
daß der ringförmige Gehäusesitz der Klötze (30),(32), umschrieben durch die Innenseitenfläche des Reifens (12) und durch die äußere Seite des Rings (16) und der Radnabe, die miteinander verbunden sind, eine Höhe zwischen 5 und 15 mm und eine geringere Tiefe hat als die Höhe, die sich aus dem Aufeinandertreffen des Rings (16) und der Radnabe (18) ergibt.

7. Elastisches Rad nach einem oder mehreren der vorhergehenden Ansprüche,
dadurch gekennzeichnet,
daß entlang der inneren senkrechten Wand des Zwischenrings (16) und der Radnabe (18) jeweils ringförmige versenkte Sitze (20),(20') vorgesehen sind, in deren Entsprechung die Bestandteile (16),(18) mit einem Durchgangsloch für einen Bolzen (22) versehen sind.

8. Elastisches Rad nach einem oder mehreren der vorhergehenden Ansprüche,
dadurch gekennzeichnet,
daß in dem ringförmigen Sitz (20) entlang den inneren senkrechten Wänden des Zwischenrings (16) und der Radnabe (18) ein umwickelter Leiter (34) vorgesehen ist, der an den gegenüberliegenden Enden mittels Schrauben (34),(34') an die Radnabe (18) und an eine Platte (34) gebunden ist, die mit einer Schraube (38) mit der inneren senkrechten Wand des Reifens (12) verbunden ist.

## Revendications

1. Roue élastique (10), comprenant un corps central ou centre de roue (18) et un anneau intermédiaire (16) reliés entre eux, un pneu périphérique (12), et une pluralité de secteurs ou blocs (30) (32) d'amortissement logés dans un siège annulaire prévu entre lesdits centres de roue (18) comportant l'anneau (16) et le pneu (12),
caractérisée en ce qu'au moins une partie des blocs (30) est réalisée en métal recouvert d'une matière élastomère (30'), et que des blocs (32) sont entièrement réalisés en caoutchouc et alternent avec les blocs (30) par rapport auxquels ils présentent une plus grande épaisseur.

2. Roue élastique selon la revendication 1,
caractérisée en ce que le revêtement (30') des blocs (30) est réalisé en une matière élastomère, soit naturelle, soit synthétique qui s'étend sur une longueur entre 0,5 et 3 mm au moins des fronts supérieur et inférieur.

3. Roue élastique selon les revendications précédentes,
caractérisée en ce que les blocs (30) qui comportent le revêtement (30') sont plus courts que les blocs en caoutchouc (32), et alternent systématiquement avec ces derniers.

4. Roue élastique selon les revendications précédentes,
caractérisée en ce que chacun desdits blocs (30) (32) présente un profil sensiblement en V qui finit sur le front inférieur dans un siège concave complémentaire formé par la liaison entre la partie supérieure du centre de roue (18) et de l'anneau intermédiaire (16), le front supérieur opposé desdits blocs entrant en contact avec la face intérieure convexe du pneu (12).

5. Roue élastique selon les revendications précédentes,
caractérisee en ce que la surface intérieure du pneu (12) est au moins complémentaire à la configuration du front supérieur des blocs (30) portant le revêtement (30').

6. Roue élastique selon les revendications précédentes,
caractérisée en ce que le siège annulaire de logement des blocs (30) (32) délimité par la surface latérale intérieure du pneu (12) et par le front extérieur de l'anneau (16) et du centre de la roue reliés entre eux, présente une hauteur comprise entre 5 et 15 mm, et une profondeur inférieure au niveau résultant entre la liaison entre ledit anneau (16) et le centre de roue (18).

7. Roue élastique selon l'une ou plusieurs des revendications précédentes,
caractérisée en ce que le long de la paroi intérieure verticale de l'anneau intermédiaire (16) et du centre de roue (18) sont prévus des sièges annulaires encastrés (20) (20') au droit desquels les composants (16) (18) présentent un trou traversant pour un boulon (22).

8. Roue élastique selon l'une ou plusieurs des revendications précédentes,
caractérisée en ce que, dans le siège annulaire (20) situé le long des parois verticales intérieures de l'anneau intermédiaire (16) et du centre de roue (18), est prévu un conducteur tressé dont les extrémités opposées sont reliées par des vis (34) (34') audit centre de roue (18) et à une plaque (36) reliée par une vis (38) à la paroi verticale intérieure du pneu (12).
